# EUROPEAN PATENT APPLICATION

(11) **EP 1 481 799 A1**
(43) Date of publication of application: **01.12.2004**
(21) Application number: 04405327.0
(22) Date of filing: 27.05.2004
(51) Int. Cl.: B32B 29/06, B32B 27/18, B32B 5/18

(54) **Optical brighteners for display panels**

(30) Priority: 29.05.2003 US 474024 P
(71) Applicant: Alcan International Limited, Montreal, Québec H3A 3G2 (CA)
(72) Inventor: Huzyak, Paul Christopher, Statesville, NC 28625 (US); Nelson, Daniel C., Old Orchard Beach, ME 04064 (US); Buechler, Troy Raymond, Salisbury, NC 28147 (US)
(74) Representative: Burkhart, Hans

(57) **Abstract**

A laminated panel for use as a display panel has a polystyrene plastic core and a cellulosic surface on each face of the core. The surface layers are impregnated with a resin formulation containing an optical brightener, and optionally a dye, and then pressed onto each face of the core to form the laminate. The finished panel is found to have outstanding brightness, and can be imprinted using a flat bed digital printed to produce signage for a variety of consumer applications.

## Description

### BACKGROUND OF THE INVENTION

Conventional display panels used in the graphic arts industry are laminated products generally having two essential layers: a core layer and a surface layer. The core layer constitutes a supporting layer onto which the surface layer is bonded. In the graphic arts industry, and particularly the point of purchase display market for that industry, displays are used to stimulate purchases of products through the graphics and messages imprinted on the displays. These displays are typically used in grocery stores, clothing stores, department stores, movie theaters, etc.

These displays are typically laminates made using a foam board core formed from a variety of materials, such as polystyrene, polyvinyl chloride, polyurethane, or other suitable plastic materials.

The surface layer for such displays is typically one or more sheets of cellulose paper, such as a high-quality alpha cellulose paper, containing a print, pattern design or solid color, that has been impregnated with a transparent resin, such as a melamine, amino, epoxy, polyester, silicone, and diallyl phthalate resins, to name a few. Alternatively, an extruded plastic sheet, such as a high impact polystyrene sheet, can be employed as the surface layer, and a urea-formaldehyde resin can be used as the resin system. The preferred and typically used resin for the surface layer is melamine-formaldehyde resin.. The cured melamine-formaldehyde resins are colorless and resistant to light and heat, as well as being resistant to a variety of solvents and stains.

Typical commercial products currently available for the display trade include Fome-Cor®, a panel formed from a polystyrene foam core with a white clay coated paper on either side, and Gatorfoam®, a heavy duty polystyrene foam board with resin saturated papers faces on either side. Other commercial products include foamed polyvinyl chloride boards, foamed polyurethane boards, and plastic-faced polystyrene foam panels.

U.S. Patent No. 6,395,408, to Nelson et al., relates to decorative laminates having a core layer including cellulosic sheets impregnated with a thermosetting resin, and a decorative layer of cellulosic sheets impregnated with a transparent thermosetting resin. The decorative layer can be saturated with a photoluminescent material, such as a phosphorescent dye, either mixed with the resin or printing ink, which luminesces in the presence of exiting radiation. These laminates panels can be sued for various applications including countertops, floors and signs.

Current technology in the graphic arts industry has shifted over the years from traditional printing methods, such as the use of screen printing, toward digital imaging, resulting in the development of flat bed digital printers capable of printing directly on flat substrates such as foam boards, foamed PVC, corrugated plastic, corrugated paper, and a variety of other flat and rigid plastic, paper and composite substrates. The popularity of flatbed printers permits the use of foam boards as printing substrates in addition to their use as mounting substrates. Consequently, the printability of these products has become an important factor in the marketplace.

Unfortunately, many foam board products used in the graphic arts industry have less than ideal printing characteristics. In particular, although the printing industry prefers a product with a brilliant white finish, many of the commercial products have poor brightness and color tones, with dull finishes and yellow tone surfaces. The proposed solutions, such as the addition of whitening fillers at the paper mill, or the use of surface coatings, are either prohibitively expensive or are minimally effective.

Accordingly, it is an objective of this invention to provide a cost effective, printable graphic arts display panel having a brilliant visual finish suitable for digital printing. It is a further objective to provide an optical brightener, and a method for incorporating the brightener in the surface of a graphic arts display panel, in a cost effective manner.

### SUMMARY OF THE INVENTION

In accordance with the invention, a laminate is provided primarily for use as a printable display panel in the graphic arts industry. The laminate comprises a foam core having a resin saturated surface layer laminated on at least one, and preferably both, surfaces of the foam core. The surface of the laminated product has been brightened by the incorporation of an optical brightener in the surface layer. As a result, the brightness level of the surface layer is at least about 100, and it is therefore suitable for printing using a flat bed digital printer.

In one embodiment, the foam core is formed from a plastic material, such as polyvinyl chloride, polyurethane or polystyrene, and preferably polystyrene. The surface layer is a plastic or cellulosic material, preferably a high-quality alpha cellulose paper or a kraft paper. Preferably, the resin used to saturate the cellulosic surface layer is part of a formulation which include the resin, the optical brightener, and optionally, a dye. The resin formulation can also contain a variety of additives, including but not limited to, catalysts, buffers, latex binders, scavengers and fillers. This resin formulation is used to impregnate and saturate the surface paper layer prior to forming the laminate.

The resin used in the resin formulation is preferably a clear, transparent resin, such as a melamine-formaldehyde resin, an amino resin, an epoxy resin, a polyester resin, a silicone resin or a diallyl phthalate resin. The optical brightener used in the resin formulation is a fluorescent whitening agent, such as a stilbene or a di-stirly-biphenyl compound, and preferably a di-sulphonic stilbene, hexa-sulphonic stilbene, 1,3-diphenyl-2-pyrazolin or napthalimid compound. The optical brightener can be present in the resin formulation in an amount of from about 0.2% to about 2% by weight.

In another embodiment, a method for forming a printable, extruded plastic panel comprises combining an optical brightener with an extrudable plastic precursor, feeding the extrudable mixture into an extruder to form an extruded product, and forming a display panel from the extruded product. Preferably, the plastic is polystyrene or polyvinyl chloride.

The display panels of this invention have a variety of uses in the graphic arts industry, such as for signage at point of purchase displays in grocery stores, malls, clothing stores, department stores and movie theaters.

### DETAILED DESCRIPTION OF THE INVENTION

The laminate of this invention includes a foam core and one or more outer surface layers having brilliant white surfaces as the result of the incorporation of an optical brightener in the surface layer. The foam core is of known construction and can be formed from a suitable plastic substrate, such as a polyvinyl chloride, polyurethane, or polystyrene substrate.

The outer layer can be formed from a cellulosic sheet, such as an alpha cellulose paper or a Kraft paper. The decorative cellulosic sheet can be impregnated with a resin formulation containing the resin, optical brightener, and optionally a dye. The dye, if used, can shift the color tones of the finished laminated product. For instance, by presenting the printer with slightly blue undertones, the printer is given a broader range of yellow tones to work with compared to conventional panels, and this is especially important when printing skin tones. As will be appreciated by those skilled in the art, the resin formulation can also include suitable amounts of other additives, such as solvents, viscosity modifiers, heat stabilizers, wetting agents, binders or the like, without departing from the spirit and scope of the invention.

The optical brightener is effective to provide the laminate with the desired color and brightness, i.e. a brilliant white printing surface, to be suitable for printing with a flat bed digital or screen printer used in the graphic arts industry. This can be accomplished without sacrificing the quality of the paper used for the surface layer or the finished laminated product, and without incurring undue expense.

The selection of an optical brightener within the scope of this invention will depend upon the color and brightness desired for the laminated panel surface. Preferred optical brighteners are selected from the class of compounds known as fluorescent whiteners. These compounds increase whiteness by absorbing ultra violet light and remitting blue fluorescence. The two types of optical brighteners satisfying this criteria which can be used in this invention are stilbene and di-stiryl-biphenyl compounds. Stilbene type brighteners are well known and are classified by the number of sulphonic acid groups present in the molecule. The disulphonic acid stilbenes are preferred for furnish applications, while the hexasulphonic acid stilbenes are preferred for size press applications. The preferred brighteners for this inventions are the disulphonic acid stilbenes. However, other types of optical brighteners which are suitable for use in this invention include coumarin derivatives, 1,3-diphenyl-2-pyrazolines and napthalimids.

The incorporation of the brightener in the resin formulation for use in saturating the cellulosic surface layer is more cost effective than adding a brightener to the furnish at the paper mill due to the scale of operations and the high quality of paper required in the laminate. Barriers to adding the brightener at the mill are substantial. Significantly more brightener is required at the mill to achieve the same result since much of the brightener will be retained in the water, rather than with the paper fiber in the paper manufacturing process. The brightener must also be removed by the mill prior to commencing additional papermaking operations.

However, when the brightening agent is incorporated in the resin formulation for saturating the cellulosic surface layer of the laminate, the result is significantly more cost effective. Moreover, adding the brightener to the resin formulation at the resin saturation stage is more efficient than adding the brightener to the paper stock since the resin formulation tends to mask the effect of the brightener as it coats the paper fibers. Therefore, if the optical brightener is added to the paper stock, the resin, which typically has a yellow tone, would tend to diminish the effect of an optical brightener added to the paper stock.

Although it is preferred to incorporate the brightener in the resin formulation, the present invention is intended to encompass the addition of the optical brightener to the cellulosic surface layer either as part of the resin formulation, or as a separate component added as a solution with the resin. Accordingly, the present invention is intended to include these variations.

The amount of optical brightener used will depend on the type of brightener and resin system employed, the substrate used, and the whiteness desired in the final product. For many applications, it is desirable to incorporate sufficient brightener in the surface layer to achieve an optical brightness of at least about 100. Typical amounts of brightener of the stilbene disulphonic type range from about 0.2% to about 2% by weight of formulation, and preferably 0.5% to 1%, on a wet basis.

The resin impregnating solution can optionally include a dye, such as a photochromic dye. A photochromic dye is one which reflects one color in the visible spectrum when in the presence of light of a first wavelength, such as visible light, and reflects a second different color in the visible spectrum when in the presence of light of a different, second wavelength such as ultraviolet light.

The dye, if present, is preferably a liquid blue dye which functions to shift the color tones in the finished product. The use of a blue dye provides a blue undertone and a broader range of yellow tones, which is important for printing skin tones. The dye can be present in relatively small amounts of from about 0.0005% to about 0.002% by weight on a wet basis.

The optical brightener and dye can be added to the resin formulation in any order. However, it is preferable to premix the dye and brightener prior to the addition of these components to the resin formulation due to their low concentration level in the formulation. The substrate, such as a bleached Kraft paper surface layer, can be dipped or sprayed with the formulation to achieve the desired saturation, applied to each face of the core, and dried to cure the resin. Excessive heat applied during the curing process may cause yellowing of the final product which is undesirable and should therefore be avoided.

In one embodiment, Gatorfoam panels are prepared by saturating Kraft paper with a resin (typically a urea-formaldehyde or melamine-formaldehyde based resin formulation) on a paper treater, and the saturated paper is dried until the moisture content is at a targeted level (typically 5%-7%). The cured sheet is cut to size at the end of the treater. A polystyrene foam sheet is cut to the correct thickness for the finished panel. This foam sheet typically varies in thickness from about 3/16" to about 3", depending on the particular application. The foam is coated with an adhesive, and the finished paper sheets are combined with the foam. The glue is typically allowed to cure under pressure and mild temperatures for a sufficient time period of several minutes to complete the fabrication process. The finished panel is cut to the desired size, and packaged for shipment.

In an alternative embodiment, the laminates can be prepared by combining the optical brightener with a raw, extrudable plastic, and extruding the plastic to form a sheet suitable for display purposes. The conditions for preparing such extruded products, such as the extrusion temperature and pressure, are well known to those skilled in the art. Preferably, the raw plastic material is polystyrene, polyurethane or polyvinyl chloride. A dye can also be added to the raw extrudable plastic mixture.

The following examples are illustrative of the various embodiments and aspects of the present invention, and are not intended in any way to limit or restrict the scope of the invention as set forth in the appended claims.

### EXAMPLE 1

A standard GatorFoam® laminated panel was prepared as shown below. Gatorfoam is a laminated product formed by sandwiching a polystyrene core between two sheets of resin impregnated paper.

A bleached Kraft paper was saturated with a urea-formaldehyde resin formulation on a paper treater, and the combination was dried until the moisture content was between 5% and 7%. The cured sheet was cut to size at the end of the treater. Polystyrene foam was cut to the correct thickness for the finished panel, in this example ½". The foam was coated with adhesive, and the finished paper sheets were combined with the foam. The glue was allowed to cure under pressure and mild temperatures for a period of several minutes to complete the fabrication process. The finished panels are cut to 4'x 8' panels for subsequent printing tests.

### EXAMPLE 2

Several laminates were prepared as in Example 1. However, the resin formulation used to impregnate and saturate the surface sheets was modified to incorporate various amounts of optical brightener. The standard, unmodified Gatorfoam product is also shown for purposes of comparison. The results are shown in Table I below. As shown in the table, the addition of even small amounts of optical brightener results in a relatively large increase in brightness. i.e. between 24% and 36%.

The "L*", "a*" and "b*" parameters shown in Table I represent the three main measurements of colorimetry as used in the CIELAB system of color measurement. L* is a measure of lightness, ranging from zero (black) to 100 (white). a* is a measure of red and green in a color. Since red and green oppose each other (nothing can be both red and green), the green colors are on the negative end of the spectrum, and the red colors are on the positive end of the spectrum. Thus, a color that has a positive a* value is on the red end of the spectrum, while a color that has a negative a* value is on the green end of the spectrum. The larger the positive value of a*, the more red the color. Conversely, the more negative the value of a*, the more green the color. Similarly, a color cannot be both blue and yellow, and the b* parameter represents the yellow color. The magnitude of the b* value is a relative measure of the blueness or yellowness of a color.

The standard Gatorfoam product has an L* value of 96.38, indicating that the product is on the far end of the lightness spectrum. The a* value for the standard Gatorfoam product is -0.54, indicating that the product is slightly green, and doe not demonstrate any red tones. Finally, the b* value for standard Gatorfoam is 3.30, which indicates a tendency toward yellow, with no bluish tones. As mentioned above, bluish tones are preferred for printing on the substrate.

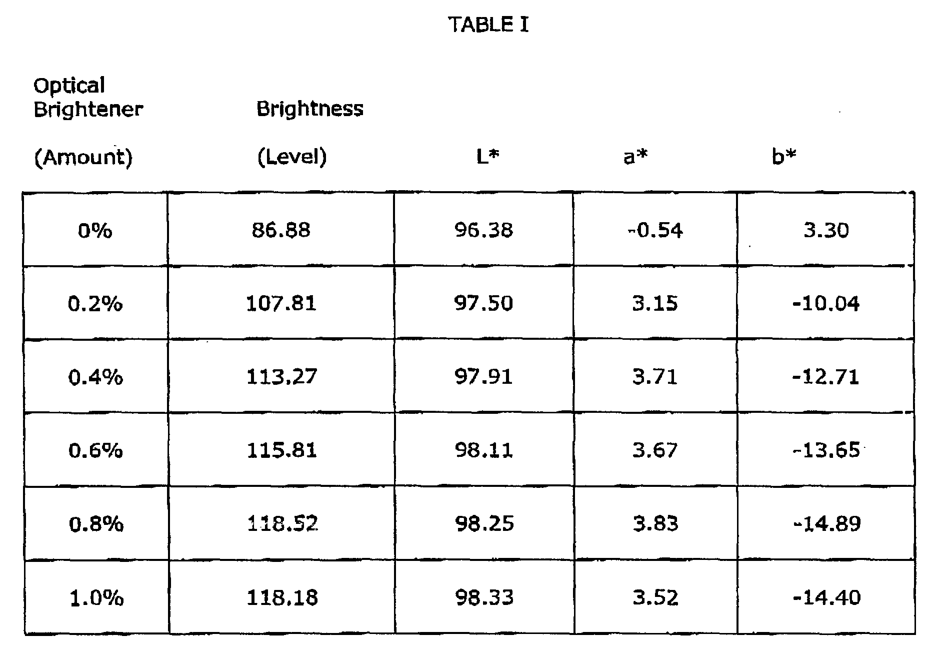

As shown in the table, the addition of an optical brightener to the resin formulation achieved an upward shift in the lightness scale, as well as a strong shift in the blue/yellow scale. For instance, the product treated with a 0.2% brightener is 1.1% lighter, 6.8 times more red, and approximately 4 times bluer than the standard (0%) product.

The addition of a small amount of blue dye to the resin formulation served to introduce additional blue tones into the product. As a further example, 0.0017% blue due was added to the resin formulation with 1% brightener as shown above. This results in L*, a* and b* values of 96.52, 3.64 and -17.66, respectively. This product was generally superior for printing purposes.

## Claims

1. A laminate comprising a foam core layer, and a surface layer on at least one face of the foam core layer, **characterised in that** an optical brightener has been incorporated in the surface layer to enhance the brightness of the surface of the decorative layer.

2. The laminate of claim 1 **characterised in that** the foam core is formed from a plastic.

3. The laminate of claim 2 **characterised in that** the foamed core plastic is selected from the group consisting of polyvinyl chloride, polystyrene and polyurethane.

4. The laminate of claim 3 **characterised in that** the plastic is polystyrene.

5. The laminate of one of the claims 1 to 4 **characterised in that** the surface layer is plastic.

6. The laminate of one of the claims 1 to 4 **characterised in that** the surface layer is a resin saturated cellulosic material.

7. The laminate of claim 6 **characterised in that** the cellulosic material is an alpha cellulose paper.

8. The laminate of claim 6 **characterised in that** the cellulosic material is Kraft paper.

9. The laminate of one of the claims 1 to 8 **characterised in that** the surface layer is applied to both faces of the foam core layer.

10. The laminate of claim 6 **characterised in that** the resin is selected from the group consisting of transparent melamine-formaldehyde resins, urea-formaldehyde resins, amino resins, epoxy resins, polyester resins, silicone resins, and diallyl phthalate resins.

11. The laminate of claim 6 **characterised in that** the resin is applied for the paper as a formulation which includes an optical brightener.

12. The laminate of claim 1, **characterised in that** the optical brightener is a fluorescent whitening agent comprising a stilbene or a di-stiryl-biphenyl.

13. The laminate of claim 12 **characterized in that** the optical brightener is selected from the group consisting of di-sulphonic stilbene, hexa-sulphonic stilben, 1,3-diphenyl-2-pyrazolin and napthalimid.

14. The laminate of claim 11 **characterised in that** the resin formulation includes a dye.

15. The laminate of claim 14 **characterised in that** the dye is present in the resin formulation in an amount of from about 0.0005% to about 0.002% by weight.

16. The laminate of claim 11 **characterised in that** the optical brightener is present in the resin formulation in an amount of from about 0.2% to 2% by weight.

17. The laminate of claim 1 **characterised in that** the brightness level of the surface layer is at least 100.

18. The laminate of claim 1 which is used as a display panel in the graphic arts industry.

19. A method for preparing a printable laminated panel used as a display in the graphic arts industry **characterised in that** the method comprises the steps of preparing a resin formulation comprising a resin, an optical brightener, and optionally, a dye, impregnating at least one cellulosic sheet with the resin formulation, applying the at least one cellulosic sheet to at least one face of a plastic core substrate, and forming a display panel having an enhanced surface brightness.

20. The method of claim 19 **characterised in that** the optical brightener is present in the resin formulation in an amount of from about 0.2% to 2% by weight.

21. The method of one of the claims 19 or 20 **characterised in that** the optical brightener is a fluorescent whitening agent comprising a stileben or a di-stiryl-biphenyl.

22. The method of one of the claims 19 to 21 **characterised in that** the display panel has a brightness level of at least 100.

23. A printable, extruded plastic panel **characterised in that** an optical brightener is distributed in the extruded plastic material.

24. A method for preparing a printable, extruded plastic panel **characterised in that** the method comprises the steps of combining an optical brightener with an extrudable plastic material, feeding the extrudable mixture into an extruder under conditions sufficient to form an extruded product, an preparing an extruded panel suitable for printing.

25. The method of claim 24 **characterised in that** the plastic materials polystyrene or polyvinyl chloride are extruded to form an extruded product.

26. The method of one of the claims 24 or 25 **characterised in that** a dye is added to the optical brightener prior to extrusion.
